# EUROPÄISCHE PATENTSCHRIFT

(11) **EP 3 953 100 B1**
(45) Veröffentlichungstag und Bekanntmachung des Hinweises auf die Patenterteilung: **26.04.2023**
(21) Anmeldenummer: 20719956.3
(22) Anmeldetag: 06.04.2020
(51) Int. Cl.: B23P 19/04, B25B 27/00, B27D 5/00, B29C 63/00, B29C 63/48

(54) **VORRICHTUNG UND VERFAHREN ZUM BESCHICHTEN VON WERKSTÜCKEN**
DEVICE AND METHOD FOR COATING WORKPIECES
DISPOSITIF ET PROCÉDÉ POUR REVÊTIR DES PIÈCES

(30) Priorität: 08.04.2019 DE 102019109128
(43) Veröffentlichungstag der Anmeldung: 16.02.2022
(73) Patentinhaber: HOMAG GmbH, 72296 Schopfloch (DE)
(72) Erfinder: GÖTZ, Reiner, 72160 Horb-Diessen (DE); GAN, Yimin, 72108 Rottenburg am Neckar (DE); RIEGER, Harald, 72178 Waldachtal (DE)
(74) Vertreter: Hoffmann Eitle
(86) Internationale Anmeldenummer: PCT/EP2020/059759
(87) Internationale Veröffentlichungsnummer: WO 2020/207970

(56) Entgegenhaltungen:
- WO-A1-03/062340
- WO-A1-2007/012537
- CH-A- 536 972
- DE-A1- 3 509 033

## Beschreibung

### Technisches Gebiet

Die Erfindung betrifft eine Vorrichtung zum Beschichten und/oder Aktivieren von bevorzugt plattenförmigen Werkstücken, die zumindest abschnittsweise aus Holz, Holzwerkstoffen, Kunststoff, Aluminium oder dergleichen bestehen. Darüber hinaus betrifft die Erfindung ein Verfahren zum Beschichten und/oder Aktivieren von bevorzugt plattenförmigen Werkstücken, die zumindest abschnittsweise aus Holz, Holzwerkstoffen, Kunststoff, Aluminium oder dergleichen bestehen.

### Stand der Technik

Beispielsweise im Bereich der Möbel- und Bauelementeindustrie werden Werkstücke häufig an einer ihrer Oberflächen mit einem Beschichtungsmaterial versehen, beispielsweise einer Kante. Das Anbringen des Beschichtungsmaterials erfolgt üblicherweise mittels eines geeigneten Haftmittels, das beispielsweise in Form von Schmelzkleber auf das Werkstück aufgebracht wird.

Aus der DE 10 2006 056010 ist ein Beschichtungsverfahren bekannt, bei welchem ein auf dem Beschichtungsmaterial oder dem Werkstück vorgesehenes Haftmittel unter Einsatz eines Lasers erwärmt bzw. aktiviert wird.

In der WO 2016 151038 ist eine Aktivierungseinrichtung für eine Vorrichtung zur Aufbringung von insbesondere kleberlos wärmeaktivierten Kantenstreifen auf Plattenartigen Werkstücken offenbart. Darüber hinaus ist in der WO 2017 114792 eine Düsenanordnung zum Erhitzen eines Kantenstreifens offenbart.

Nachteilig bei der oben benannten Vorrichtung zur Aufbringung von kleberlos wärmeaktivierten Kanten ist die Tatsache, dass aus der Strömung des Aktivierungsmittels, meist handelt es sich dabei um erhitzte Luft, ein hoher Schalldruck entsteht. Dementsprechend müssen aus Gründen der Betriebssicherheit Lärmschutzverkleidungen vorgesehen werden, die die Zugänglichkeit des betreffenden Maschinenbereichs erschweren und zusätzliche Kosten verursachen.

Eine Vorrichtung zum Beschichten eines Werkstücks ist außerdem aus der WO 03/062340A1 bekannt. Die DE 35 09 033 A1, die CH 536 972 A und die WO 2007/012537 A1 beschreiben darüber hinaus schalldämpfende Elemente.

### Darstellung der Erfindung

Aufgabe der Erfindung ist es, eine einfache und effiziente Möglichkeit zur Erhöhung der Betriebssicherheit bei der Beschichtung von Werkstücken bereitzustellen.

Erfindungsgemäß wird diese Aufgabe durch eine Vorrichtung nach Anspruch 1, oder ein Verfahren nach dem Anspruch 14 gelöst. Bevorzugte Ausführungsformen sind in den Unteransprüchen angegeben.

Eine erfindungsgemäße Vorrichtung zum Beschichten von Werkstücken, die bevorzugt zumindest abschnittsweise aus Holz, Holzwerkstoffen, Kunststoff, Aluminium oder dergleichen bestehen, weist auf: eine Zuführeinrichtung zum Zuführen eines Beschichtungsmaterials; eine Andrückeinrichtung zum Andrücken des Beschichtungsmaterials an eine Oberfläche eines Werkstücks; eine Fördereinrichtung zum Herbeiführen einer Relativbewegung zwischen der Andrückeinrichtung und dem jeweiligen Werkstück; und eine Aktivierungseinrichtung zum Aktivieren eines Haftmittels auf einem in der Zuführeinrichtung zugeführten Beschichtungsmaterial und/oder zum Aktivieren eines Haftmittels auf einer zu beschichtenden Oberfläche eines Werkstücks. Die Aktivierungseinrichtung weist zumindest eine Zuleitung zur Zufuhr eines Aktivierungsmittels sowie einen Düsenkörper mit einem Einströmkanal und einem Austrittsbereich auf. Die Aktivierungseinrichtung weist zudem zumindest ein schallwirksames Element auf, das ausgebildet ist, den aus der Strömung des Aktivierungsmittels resultierenden Schalldruck zu reduzieren und/oder eine Frequenzverschiebung zu erwirken. Die Vorrichtung ist so ausgebildet, dass das schallwirksame Element an mindestens einer der Stellen: Zuleitung der Aktivierungseinrichtung; Einströmkanal des Düsenkörpers, Austrittsbereich des Düsenkörpers; angeordnet ist.

Das schallwirksame Element kann als Schalldämpfelement und/oder als Resonator ausgebildet sein. Als Resonator wird im vorliegenden Zusammenhang eine Einrichtung bezeichnet, die derart auf eine oder mehrere bestimmte Frequenzen abgestimmt ist, dass sie bei breitbandiger Anregung im Wesentlichen nur mit der bestimmten Frequenz, bzw. den bestimmten Frequenzen schwingt.

Dadurch, dass die erfindungsgemäße Vorrichtung zumindest ein entsprechendes schallwirksames Element aufweist, kann der Schalldruck des durch die Strömung des Aktivierungsmittels entstehenden Schalls reduziert werden oder die Frequenz dieses Schalls derart verändert werden, dass die Notwendigkeit einer Lärmschutzverkleidung entfällt.

Weitergehend kann die Aktivierungseinrichtung eine Aktivierungsmittelerwärmungs- und/oder
Aktivierungsmittelabkühlvorrichtung und/oder einen Aktivierungsmittelabführkanal aufweisen, wobei in einer oder in mehreren dieser a Einrichtungen mindestens ein schallwirksame Element angeordnet sein kann.

Eine Aktivierungsmittelerwärmungsvorrichtung kann darüber hinaus eine Energiequelle aufweisen. Wenn zumindest ein schallwirksames Element in der Aktivierungsmittelerwärmungsvorrichtung angeordnet ist, kann dieses an der Energiequelle befestigt, oder im Inneren der Energiequelle angeordnet sein.

Wenn das schallwirksame Element am Austrittsbereich des Düsenkörpers angeordnet ist, kann die Konfiguration auch derart beschrieben werden, dass das schallwirksame Element zugleich den Austrittsbereich des Düsenkörpers bildet. Dies ist insbesondere dann der Fall, wenn das schallwirksame Element flächenbündig im Düsenkörper versenkt(Kraftschluss/Formschluss), und/oder stoffschlüssig mit diesem ausgeführt ist.

Die benannten Positionen können insofern als vorteilhaft betrachtet werden, als dass diese nicht in den Arbeitsbereich eines Bedieners fallen und somit keine Störungen der Bedienvorgänge zu erwarten sind.

Erfindungsgemäß kann das schallwirksame Element einlagiges oder mehrlagiges Gewebe und/oder eine Wabenstruktur enthalten. Während sich die benannten Gewebetypen insbesondere dadurch auszeichnen, dass sie kostengünstig verfügbar sind, kann eine Wabenstruktur Vorteile in Bezug auf die mechanische Steifigkeit aufweisen. Insbesondere bei hohen Strömungsgeschwindigkeiten des Aktivierungsmittels kann eine hohe mechanische Steifigkeit eine wichtige Anforderung an die im schallwirksamen Element verbauten Komponenten darstellen.

Als Beispiele für eine Wabenstruktur können zwei- oder dreidimensionale Aneinanderreihungen von n-Ecken, Kreisen oder Ellipsen benannt werden. Ferner können dem Begriff der Wabenstruktur auch eine ein- oder mehrdimensionale Stapelung von Lavaldüsen zugeordnet werden.

Die benannte Vorrichtung kann so ausgebildet sein, dass das schallwirksame Element eine Mehrzahl von Gitterelementen enthält, die zusammen eine Gitterstruktur mit Öffnungen bilden, wobei ein Gitterelement durch Verschiebung, beispielsweise Parallelverschiebung eines ebenen Querschnitts vorzugsweise senkrecht zur Querschnittsebene gebildet werden kann. Ein Gitterelement kann darüber hinaus oder alternativ auch als rotationssymmetrischer Körper ausgebildet sein. Eine erste Mehrzahl von Gitterelementen kann gegenüber einer zweiten Mehrzahl von Gitterelementen einen Winkel zwischen 20° und 90°, bevorzugt zwischen 45° und 90° und besonders bevorzugt zwischen 85° und 90° einnehmen. Die Gitterelemente können Kerben aufweisen, die derart ausgebildet sind, dass jeweils gegeneinander angewinkelte Gitterelemente ineinandergesteckt werden können. Die jeweils gegeneinander angewinkelten Gitterelemente können beispielsweise durch Klemmen und/oder Verschweißen miteinander verbunden sein. Alternativ oder zusätzlich können Sie durch einen Rahmen und/oder eine Stützstruktur in Position gehalten werden.

Ähnlich wie die oben benannte Wabenstruktur kann die Anordnung der Gitterelemente innerhalb des schallwirksamen Elements eine hohe mechanische Festigkeit fördern.

In vorteilhafter Weiterbildung der Erfindung kann ein Gitterelement einen runden und einen im Wesentlichen gegenüberliegenden spitzen Bereich aufweisen. Der Querschnitt der Gitterelemente kann somit auch als Tragflächenförmig oder Tropfenförmig bezeichnet werden. Bevorzugt ist dabei diejenige Seite des Gitterelements, die vom Aktivierungsmittel angeströmt wird, rund ausgeführt. Diese Ausführungsform ist insofern vorteilhaft, als dass durch den niedrigen Strömungswiderstandsbeiwert der Tragflächen bzw. Tropfenform der Strömungswiderstand des betreffenden schallwirksamen Elements reduziert, und die energetische Effizienz der betreffenden Vorrichtung somit gesteigert werden kann.

Das schallwirksame Element kann weitergehend so ausgebildet sein, dass mehrere Gitterstrukturen, Wabenstrukturen und/oder Sinterstrukturen derart gestapelt sind, dass ihre Öffnungen (15) zumindest teilweise zueinander fluchten und/oder zumindest teilweise zueinander versetzt sind. Eine derartige Stapelung erlaubt eine Vielzahl an möglichen Schichtungen, wodurch die Eigenschaften des schallwirksamen Elements gezielt auf ein vorgegebenes Anforderungsprofil abgestimmt werden können.

Weitergehend kann das schallwirksame Element eine Vielzahl von Kugeln aufweisen. Diese können beispielsweise im Wesentlichen kubisch primitiv, kubisch raumzentriert, kubisch flächenzentriert oder als hexagonal dichteste Kugelpackung angeordnet sein. Derartige Kugelpackungen weisen strömungstechnisch miteinander in Verbindung stehende Hohlräume auf, die von einem Aktivierungsmittel durchströmt werden können. Durch die Anordnung der Hohlräume und der Kugeln können diffuse Schallreflexionen und/oder Absorptionen erzielt werden, durch die der aus der Strömung des Aktivierungsmittels entstehende Schalldruck in besonders vorteilhafter Weise gesenkt werden kann.

Das Schalldämpfelement kann als Alternativ zu den oben genannten Kugeln oder zusätzlich zu diesen eine Vielzahl von Stromlinienkörpern aufweisen, wobei ein Stromlinienkörper ein im Wesentlichen halbkugelförmiges Ende und ein gegenüberliegendes spitzes Ende aufweist. Bevorzugt sind die Stromlinienkörper derart im schallwirksamen Element angeordnet, dass das Aktivierungsmittel die im Wesentlichen halbkugelförmigen Enden der Stromlinienkörper anströmt. Durch das halbkugelförmige Ende und das spitze Ende eines Stromlinienkörpers verläuft eine Stromlinienkörperachse. Vorteilhafterweise sind die Stromlinienkörperachsen sämtlicher Stromlinienkörper des schallwirksamen Elements im Wesentlichen parallel orientiert.

Die Ausführungsform mit Stromlinienkörpern kann in Bezug auf auftretende Strömungsverluste, insbesondere Druckverluste und Verluste der Strömungsgeschwindigkeit, vorteilhaft sein.

Da als Aktivierungsmittel erhitzte Gase eingesetzt werden können, kann die erfindungsgemäße Vorrichtung in vorteilhafter Weise derart weitergebildet werden, dass das schallwirksame Element oder Teile des schallwirksamen Elements aus einem Werkstoff gebildet sind, der eine Eignung für einen Dauertemperatureinsatz von bis zu 900°C, bevorzugt jedoch bis zu 500°C, aufweist. Konkret kann das schallwirksame Element oder Teile des schallwirksamen Elements aus metallischen und/oder einem keramischen Werkstoff gebildet sein.

Die Herstellung des schallwirksamen Elements oder zumindest von Teilen des schallwirksamen Elements kann in vorteilhafter Weise durch ein Gussverfahren, ein Sinterverfahren und/oder ein additives Verfahren erfolgen. Während ein Guss- oder

Sinterverfahren mit vergleichsweise niedrigen Herstellungskosten einhergeht, erlaubt ein additives Fertigungsverfahren insbesondere die Herstellung komplexer Geometrien.

Ein schallwirksames Elements gemäß einer weiteren bevorzugten Ausführungsform weist eine innere Leitung mit einer Achse und eine im Wesentlichen konzentrisch zu dieser Achse angeordnete äußere Leitung auf. Die äußere Leitung hat einen größeren Querschnitt als die innere Leitung. Die innere Leitung und die äußere Leitung überlappen sich in einem ersten Längenbereich. Die innere Leitung ist an einem ersten Ende geöffnet und an einem im Wesentlichen gegenüberliegenden Ende verschlossen. Die äußere Leitung ist an einem zweiten Ende geöffnet und an einem im Wesentlichen gegenüberliegenden Ende verschlossen. Die innere Leitung weist an ihrer Mantelfläche Durchgangsöffnungen auf, die ausgebildet sind, das erste Ende in fluidische Verbindung mit dem zweiten Ende zu bringen. Erfindungsgemäß ist bei der benannten Ausführungsform im ersten Längenbereich ein schalldämpfendes Material angeordnet.

In einer vorteilhaften Weiterbildung der oben benannten Ausführungsform kann das schalldämpfende Material an der Innenfläche des äußeren Rohrs angeordnet sein. Zudem kann an einer der Rohrachse zugewandten Seite des schalldämpfenden Materials eine Vielzahl von im wesentlichen Spitz in Richtung der Rohrachse zulaufenden Strukturen ausgebildet sein. Das Schalldämpfende Material kann ein poröses Material sein.

Die Struktur des schallwirksamen Elements gemäß der oben beschriebenen bevorzugten Ausführungsform zeichnet sich durch eine Kompakte, für die Anordnung in Rohren geeignete Bauform aus. Poröse Materialien weisen zudem ein meist diffuses Schallreflexionsverhalten auf, das sich im vorliegenden Kontext auch vorteilhaft auf den Schalldruck und die Frequenz auswirken kann.

Weitergehend kann als schallwirksames Element auch ein Rohr verwendet werden, das an seiner Innenseite mit einem schalldämpfenden Material und/oder einem Resonatormaterial ausgekleidet ist. Ebenso kann es sich bei dem schalldämpfenden Element um ein Rohr handeln, das aus einem schalldämpfenden Material und/oder einem Resonatormaterial gebildet ist. Vorteilhafterweise kann die gesamte Zuleitung der Aktivierungseinrichtung aus einem schalldämpfenden Material und/oder einem Resonatormaterial gebildet werden.

Das im Einströmkanal des Düsenkörpers und/oder das am Austrittsbereich des Düsenkörpers angeordnete schallwirksame Element kann kraft-, form-, und/oder stoffschlüssig am Düsenkörper befestigt werden.

Genauso ist jedoch eine Ausführungsform denkbar, bei der das im Einströmkanal des Düsenkörpers und/oder das am Austrittsbereich des Düsenkörpers angeordnete schallwirksame Element einstückig mit dem Düsenkörper ausgeführt ist. Die einstückige Ausführung führt dabei verglichen mit einer Differentialbauweise zu einer Reduzierung der Anzahl der vorrichtungsbezogenen Komponenten und kann somit mit verringerten Herstellungskosten einhergehen.

Wenn das schallwirksame Element in der Zuleitung der Aktivierungseinrichtung angeordnet ist, kann eine kraft-, form-, oder stoffschlüssige Verbindung mit der Zuleitung vorgesehen sein. Während die kraftschlüssige Verbindung, beispielsweise durch Einpressen oder Klemmen, meist mit geringen Herstellungskosten einhergeht, kann die formschlüssige Verbindung Vorteile in Bezug auf die Zugänglichkeit, bzw. Austauschbarkeit im Rahmen eines Wartungsvorgangs bieten. Die stoffschlüssige Ausführung, herstellbar beispielsweise unter Verwendung eines additiven Fertigungsverfahrens, eines Gussverfahrens oder eines Schweißverfahrens, kann wiederum die Gestaltungsfreiheit bei der der Geometrie des schallwirksamen Elements erhöhen.

In vorteilhafter Weise kann das am Austrittsbereich des Düsenkörpers angeordnete schallwirksame Element flächenbündig im Düsenkörper versenkt sein. Auf diese Weise wird erreicht, dass Kollisionen mit dem Beschichtungsmaterial oder dem Werkstück verhindert werden. Unabhängig davon, ob das am Austrittsbereich des Düsenkörpers angeordnete schallwirksame Element flächenbündig im Düsenkörper versenkt, oder auf diesen aufgesetzt ist, kann die Verbindung zwischen dem schallwirksamen Element und dem Düsenkörper kraft-, form-, und/oder stoffschlüssig ausgeführt sein.

Wenn das schallwirksame Element ein Gewebe, eine Gitterstruktur und/oder eine Wabenstruktur aufweist, ist es besonders vorteilhaft, dass die Maschenweite der jeweiligen Struktur oder zumindest einer der Strukturen den Wert 5000 µm, bevorzugt den Wert 1000 µm und besonders bevorzugt den Wert 500 µm unterschreitet. Die Maschenweite bezeichnet die dreidimensionale Ausdehnung eines Hohlraums in einer Festkörperstruktur, wie beispielsweis einer Gitter- oder Wabenstruktur, oder den zweidimensionalen Abstand von Fasern oder Drähten einem Gewebe.

Erfindungsgemäß wird zudem ein Verfahren zum Beschichten und/oder Aktivieren von Werkstücken, die bevorzugt zumindest abschnittsweise aus Holz, Holzwerkstoffen, Kunststoff, Aluminium oder dergleichen bestehen, angegeben. Das erfindungsgemäße Verfahren wird mit einer zuvor beschriebenen, erfindungsgemäßen Vorrichtung durchgeführt und weist die folgenden Schritte auf:
- Herbeiführen einer Relativbewegung zwischen der Andrückeinrichtung und dem jeweiligen Werkstück mittels der Fördereinrichtung;
- Zuführen des Beschichtungsmaterials mittels der Zuführeinrichtung;
- Aufbringen und/oder Aktivieren eines Haftmittels auf einem in der Zuführeinrichtung zugeführten Beschichtungsmaterial und/oder einer zu beschichtenden Oberfläche eines Werkstücks mittels der Aktivierungseinrichtung.

Dem oben beschriebenen erfindungsgemäßen Verfahren können je nach Ausführungsform der erfindungsgemäßen Vorrichtung vergleichbare Vorteile zugeordnet werden.

Weiterhin wird erfindungsgemäß ein Verfahren zum Beschichten und/oder Aktivieren von Werkstücken, die bevorzugt zumindest abschnittsweise aus Holz, Holzwerkstoffen, Kunststoff, Aluminium oder dergleichen bestehen, angegeben. Das erfindungsgemäße Verfahren wird mit einer zuvor beschriebenen, erfindungsgemäßen Vorrichtung durchgeführt, wobei die Erfindungsgemäße Vorrichtung darüber hinaus einen Sensor zum Messen einer Messgröße aufweist. Das Verfahren umfasst zumindest die Schritte: Messen einer Messgröße; und Verändern eines Arbeitsparameters auf der Grundlage der gemessenen Messgröße;

Als Messgröße können beispielsweise eine Temperatur, ein atmosphärische Druck, ein Schalldruck, eine Schallfrequenz, eine Fluidviskosität oder eine Reynoldszahl angegeben werden. Arbeitsparameter können beispielsweise eine Vorschubgeschwindigkeit, z.B. eine Vorschubgeschwindigkeit eines Werkstücks, eine Strömungsgeschwindigkeit und/oder eine Heizleistung bzw. Aktivierungsenergie sein. Im Falle eines gekühlten Aktivierungsmediums kann der Arbeitsparameter auch eine Kühlleistung sein. Darüber hinaus können im Rahmen des betreffenden Verfahrens auch ein oder mehrere Arbeitsparameter auf der Grundlage einer oder mehrerer Messgrößen verändert werden.

Das letztgenannte Verfahren kann in vorteilhafter Weise dazu führen, dass die verwendete Vorrichtung, beispielsweise unter Verwendung einer Steuereinheit, selbstständig die jeweils optimalen Bedingungen für einen Bediener bereitstellt. Insbesondere kann es sich bei diesen optimalen Bedingungen um Bedingungen in Bezug auf die Betriebssicherheit, die Ergonomie und/oder die Produktivität der Vorrichtung handeln.

### Kurze Beschreibung der Figuren

- Fig. 1: zeigt eine Ausführungsform einer Vorrichtung zur Beschichtung von Werkstücken gemäß dem Stand der Technik
- Fig. 2: zeigt eine erste Ausführungsform einer erfindungsgemäßen Vorrichtung zur Beschichtung von Werkstücken
- Fig. 3: zeigt eine zweite Ausführungsform einer erfindungsgemäßen Vorrichtung zur Beschichtung von Werkstücken
- Fig. 4: zeigt eine dritte Ausführungsform einer erfindungsgemäßen Vorrichtung zur Beschichtung von Werkstücken
- Fig. 5: zeigt eine Gewebestruktur für ein erfindungsgemäßes schallwirksames Element
- Fig. 6: zeigt eine Gitterstruktur für ein erfindungsgemäßes schallwirksames Element
- Fig. 7a: zeigt eine erste Ausführungsform eines Gitterelements für eine Gitterstruktur für ein erfindungsgemäßes schallwirksames Element
- Fig. 7b: zeigt eine zweite Ausführungsform eines Gitterelements für eine Gitterstruktur für ein erfindungsgemäßes schallwirksames Element
- Fig. 8a: zeigt einen Axialschnitt einer zweiten vorteilhaften Ausführungsform eines erfindungsgemäßen schallwirksamen Elements;
- Fig. 8b: zeigt einen Axialschnitt einer dritten vorteilhaften Ausführungsform eines erfindungsgemäßen schallwirksamen Elements;
- Fig. 9a: zeigt Bestandteile einer dritten vorteilhaften Ausführungsform eines erfindungsgemäßen schallwirksamen Elements;
- Fig. 9b: zeigt Bestandteile einer vierten vorteilhaften Ausführungsform eines erfindungsgemäßen schallwirksamen Elements;
- Fig. 10: zeigt einen Bestandteil einer fünften vorteilhaften Ausführungsform eines erfindungsgemäßen schallwirksamen Elements;
- Fig. 11a: zeigt eine erste erfindungsgemäße Anordnung des Bestandteils der fünften Ausführungsform eines erfindungsgemäßen schallwirksamen Elements;
- Fig. 11b: zeigt eine zweite erfindungsgemäße Anordnung des Bestandteils der fünften Ausführungsform eines erfindungsgemäßen schallwirksamen Elements;

### Ausführliche Beschreibung bevorzugter Ausführungsformen

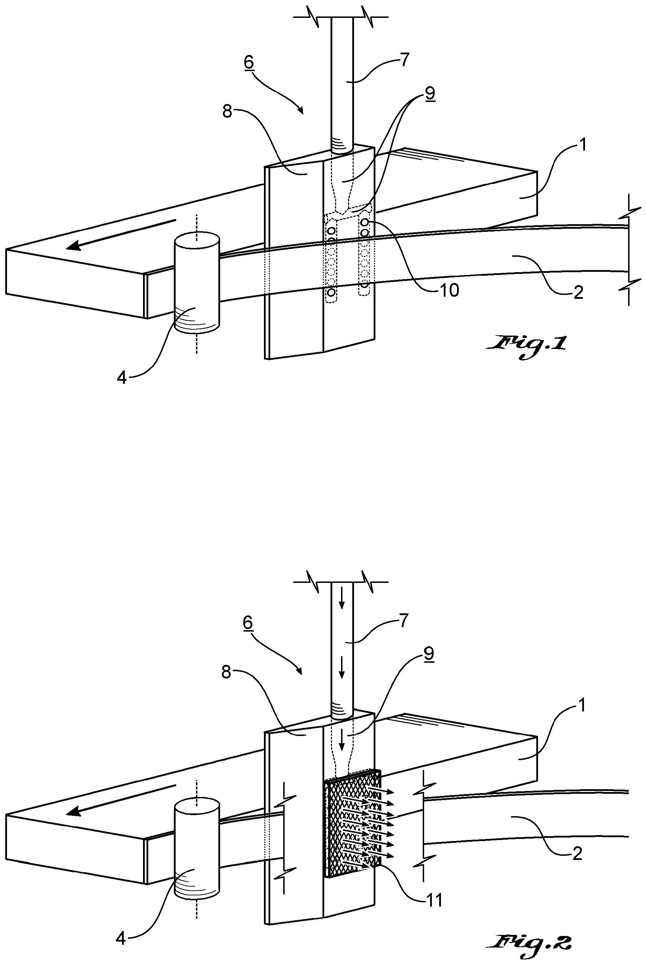

In Fig. 1 ist eine Ausführungsform einer Vorrichtung zur Beschichtung eines Werkstücks 1 gemäß dem Stand der Technik dargestellt. Die dargestellte Vorrichtung weist auf: eine nicht dargestellte Zuführeinrichtung 3 zum Zuführen eines Beschichtungsmaterials 2; eine Andrückeinrichtung 4 zum Andrücken des Beschichtungsmaterials 2 an eine Oberfläche eines Werkstücks 1; eine nicht dargestellte Fördereinrichtung 5 zum Herbeiführen einer Relativbewegung zwischen der Andrückeinrichtung 4 und dem jeweiligen Werkstück 1; sowie eine Aktivierungseinrichtung 6 zum Aktivieren eines Haftmittels auf einem in der Zuführeinrichtung 3 zugeführten Beschichtungsmaterial 2. Die Aktivierungseinrichtung weist dabei eine Zuleitung 7 sowie einen Düsenkörper 8 auf. In den Düsenkörper wurde ein Einströmkanal 9 bzw. ein System aus Einströmkanälen 9 eingebracht. Zudem weist der Düsenkörper 8 einen Austrittsbereich 10 auf, der im vorliegenden Fall als eine Vielzahl von Düsen 10 ausgebildet ist.

Die in Fig. 2 dargestellte Ausführungsform der vorliegenden Erfindung unterscheidet sich von der Vorrichtung aus Fig. 1 dahingehend, dass zusätzlich ein schallwirksames Element 11, ausgebildet als Schalldämpfelement und/oder Resonator, am Austrittsbereich 10 des Düsenkörpers 8 angeordnet ist.

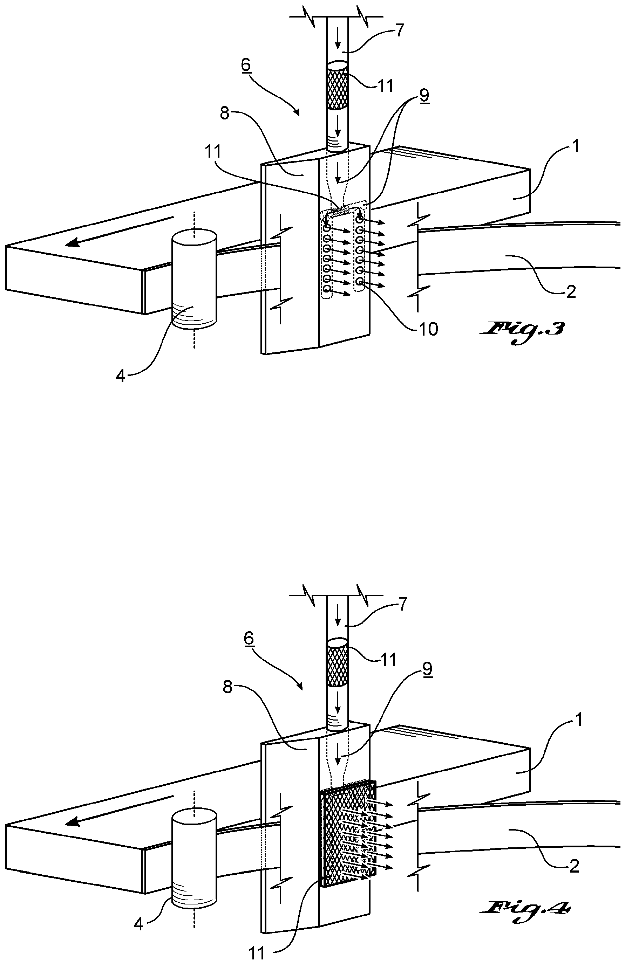

Die in Fig. 3 dargestellte Ausführungsform der vorliegenden Erfindung unterscheidet sich von der Vorrichtung aus Fig. 1 dahingehend, dass zusätzlich ein schallwirksames Element 11, ausgebildet als Schalldämpfelement und/oder Resonator in der Zuleitung 7 des Düsenkörpers 8 angeordnet ist. Darüber hinaus ist ein schallwirksames Element 11, ausgebildet als Schalldämpfelement und/oder Resonator, im Einströmkanal 9 des Düsenkörpers angeordnet. Nicht dargestellt, jedoch auch denkbar ist eine Ausführungsform, bei der nur in der Zuleitung 7 oder nur im Einströmkanal 9 des Düsenkörpers 8 ein schallwirksames Element, ausgebildet als Schalldämpfelement und/oder als Resonator angeordnet ist.

Die in Fig. 4 dargestellte Ausführungsform der vorliegenden Erfindung unterscheidet sich von der Vorrichtung aus Fig. 1 dahingehend, dass zusätzlich ein schallwirksames Element 11, ausgebildet als Schalldämpfelement und/oder Resonator, am Austrittsbereich 10 des Düsenkörpers angeordnet ist. Darüber hinaus weist die Zuleitung 7 ein schallwirksames Element 11, ausgebildet als Schalldämpfelement und/oder als Resonator, auf.

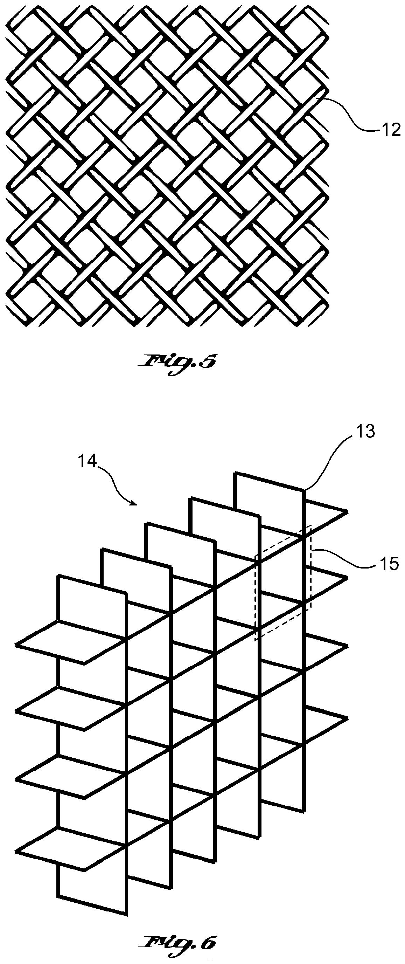

Fig. 5 zeigt ein Beispiel für ein Gewebe, das als Bestandteil des schallwirksamen Elements 11 eingesetzt werden kann. Das Gewebe besteht dabei vorzugsweise aus hochtemperaturbeständigem Draht 12, der zu einem flächigen oder dreidimensionalen Produkt verarbeitet ist und erfindungsgemäß ein- oder mehrlagig, vollständig oder teilweise fluchtend oder auch versetzt gestapelt angeordnet sein kann.

Fig. 6 zeigt ein Beispiel für eine Gitterstruktur 14, die aus Gruppen von jeweils zueinander geneigten Gitterelementen 13 besteht. Im vorliegenden Beispiel weisen die Gruppen von Gitterelemente 13 einen 90°-Winkel zueinander auf. Die dargestellte Anordnung von Gitterelementen 13 hat zur Folge, dass Öffnungen 15 entstehen, durch die ein Aktivierungsmittel strömen kann.

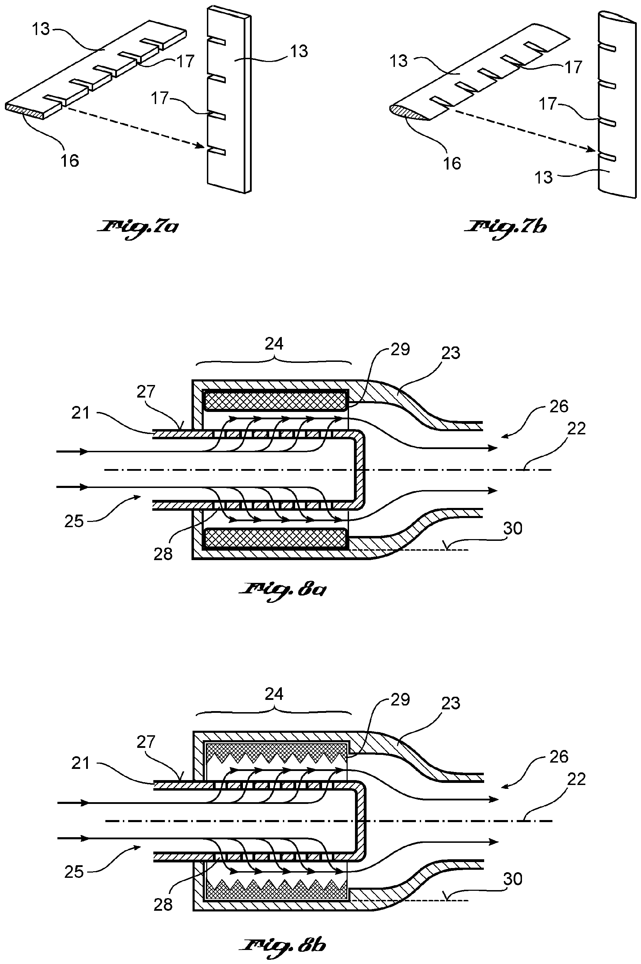

Fig. 7a zeigt beispielhaft zwei Gitterelemente 13, die jeweils Kerben 17 aufweisen, sodass die Gitterelemente ineinander gesteckt werden können. Eine vorteilhafte Weiterbildung der Gitterelemente 13 aus Fig. 7a, ebenfalls unter Verwendung von Kerben 17, ist in Fig. 7b dargestellt. Hierbei weisen die Gitterelemente 13 einen tropfenförmigen Querschnitt 16 auf, wodurch Druckverluste bei der Strömung des Aktivierungsmittels reduziert werden können.

Eine weitere vorteilhafte Ausführungsform eines erfindungsgemäßen schallwirksamen Elements 11 ist in einem Axialschnitt in Fig. 8a dargestellt. Das schallwirksame Element 11 gemäß der weiteren vorteilhaften Ausführungsform weist eine innere Leitung 21 mit einer Achse 22 und eine im Wesentlichen konzentrisch zu dieser Achse 22 angeordnete äußere Leitung 23 auf. Die äußere Leitung 23 weist dabei einen größeren Querschnitt auf, als die innere Leitung 21. Die innere Leitung 21 und die äußere Leitung 23 überlappen in einem ersten Längenbereich 24. Die innere Leitung 21 ist an einem ersten Ende 25 geöffnet und an einem im Wesentlichen gegenüberliegenden Ende verschlossen. Die äußere Leitung 23 ist an einem zweiten Ende 26 geöffnet und an einem im wesentlichen gegenüberliegenden Ende verschlossen. Die innere Leitung 21 weist an ihrer Mantelfläche 27 Durchgangsöffnungen 28 auf, die ausgebildet sind, das erste Ende 25 in fluidische Verbindung mit dem zweiten Ende 26 zu bringen. An der Innenfläche 30 der äußeren Leitung ist ein schalldämpfendes Material 29 angeordnet. Wenn ein Aktivierungsmittel in das erste Ende einströmt, tritt es durch die Durchgangsöffnungen 28 hindurch in den Bereich zwischen der inneren Leitung 21 und der äußeren Leitung 23 und verlässt die äußere Leitung an einem zweiten Ende. Der aus der Strömung des Aktivierungsmittels resultierende Schall wird dabei von dem schalldämpfenden Material 29 zumindest in Teilen absorbiert.

Die in Fig. 8b dargestellte dritte Ausführungsform eines erfindungsgemäßen schallwirksamen Elements unterscheidet sich von der in Fig. 8a dargestellten Ausführungsform dahingehend, dass das schalldämpfende Material 29 an seiner der Achse 22 zugewandten Fläche spitze, beispielsweise kegel- oder pyramidenförmige Strukturen aufweist. Durch diese geometrische Form kann die schalldämpfende Wirkung über die materialgebundene schalldämpfende Wirkung hinaus verstärkt werden.

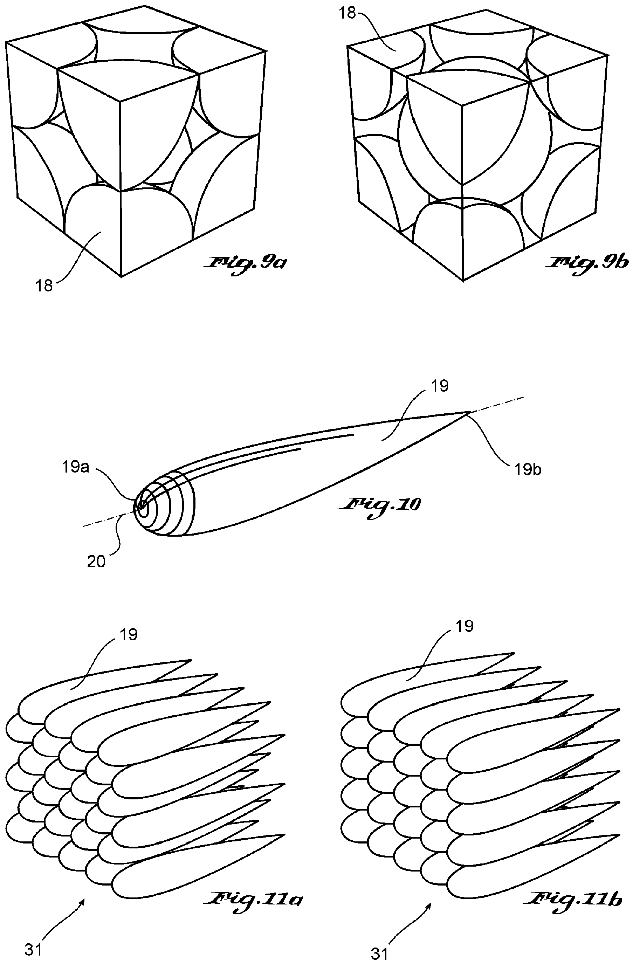

Die Figuren 9a und 9b zeigen Bestandteile einer dritten, bzw. vierten vorteilhaften Ausführungsform eines erfindungsgemäßen schallwirksamen Elements; Konkret kann das schallwirksame Element 11 Kugeln 18 aufweisen, die in einer kubisch primitiven (Fig.9a) oder kubisch raumzentrierten (Fig.9b) Packung angeordnet sind.

Ein erfindungsgemäßes schallwirksames Element 11 kann darüber hinaus auch Stromlinienkörper 19, wie beispielhaft in Fig. 10 dargestellt, aufweisen. Derartige Stromlinienkörper 19 könnte beispielsweise versetzt (Fig..11a) oder senkrecht gestapelt (Fig. 11b) angeordnet sein. Die Anordnung wirkt sich direkt auf den freien Strömungsquerschnitt aus. Ein kleiner Strömungsquerschnitt, der mit der versetzten Stapelung nach Fig. 11a einhergeht, kann vorteilhaft in Bezug auf die schalldämpfende Wirkung des schallwirksamen Elements sein. Hingegen kann eine senkrecht gestapelte Anordnung nach Fig. 11b im Vergleich mit der versetzten Anordnung aus Fig. 11a eine Verringerung von Druck- und/oder Geschwindigkeitsverlusten in der Strömung des Aktivierungsmittels bewirken.

### Bezugszeichen

- 1: Werkstück
- 2: Beschichtungsmaterial
- 3: Zuführeinrichtung
- 4: Andrückeinrichtung
- 5: Fördereinrichtung
- 6: Aktivierungseinrichtung
- 7: Zuleitung
- 8: Düsenkörper
- 9: Einströmkanal
- 10: Austrittsbereich
- 11: Schallwirksames Element
- 12: Draht
- 13: Gitterelement
- 14: Gitterstruktur
- 15: Öffnung
- 16: Ebener Querschnitt
- 17: Kerbe
- 18: Kugel
- 19: Stromlinienkörper
- 19a: Halbkugelförmiges Ende des Stromlinienkörpers
- 19b: Spitzes Ende des Stromlinienkörpers
- 20: Stromlinienkörperachse
- 21: Innere Leitung
- 22: Leitungsachse
- 23: Äußere Leitung
- 24: Erster Längenbereich
- 25: Erstes Ende
- 26: Zweites Ende
- 27: Mantelfläche
- 28: Durchgangsöffnung
- 29: Schalldämpfendes Material
- 30: Innenfläche der äußeren Leitung
- 31: Anordnung mehrerer Stromlinienkörper

## Patentansprüche

1. Vorrichtung zum Beschichten von Werkstücken (1), die bevorzugt zumindest abschnittsweise aus Holz, Holzwerkstoffen, Kunststoff, Aluminium oder dergleichen bestehen, umfassend
eine Zuführeinrichtung zum Zuführen eines Beschichtungsmaterials (2); eine Andrückeinrichtung (4) zum Andrücken des Beschichtungsmaterials (2) an eine Oberfläche eines Werkstücks; eine Fördereinrichtung zum Herbeiführen einer Relativbewegung zwischen der Andrückeinrichtung (4) und dem jeweiligen Werkstück; und eine Aktivierungseinrichtung (6) zum Aktivieren eines Haftmittels auf einem in der Zuführeinrichtung (3) zugeführten Beschichtungsmaterial (2) und/oder zum Aktivieren eines Haftmittels auf einer zu beschichtenden Oberfläche eines Werkstücks (1), wobei die Aktivierungseinrichtung (6) zumindest eine Zuleitung (7) zur Zufuhr eines Aktivierungsmittels sowie einen Düsenkörper (8) mit einem Einströmkanal (9) und einem Austrittsbereich (10) aufweist,
**dadurch gekennzeichnet, dass**
die Aktivierungseinrichtung zumindest ein schallwirksames Element (11) aufweist, das ausgebildet ist, den aus der Strömung des Aktivierungsmittels resultierenden Schalldruck zu reduzieren und/oder eine Frequenzverschiebung zu erwirken, wobei das schallwirksame Element (11) an mindestens einer der Stellen: Zuleitung (7) der Aktivierungseinrichtung (6); Einströmkanal (9) des Düsenkörpers (8); Austrittsbereichs (10) des Düsenkörpers (8); angeordnet ist.

2. Vorrichtung nach Anspruch 1, bei der das mindestens eine schallwirksame Element (11) als Schalldämpfelement und/oder als Resonator ausgebildet ist.

3. Vorrichtung nach einem der vorstehenden Ansprüche, wobei die Aktivierungseinrichtung (6) mindestens eine Aktivierungsmittelerwärmungsvorrichtung und/oder mindestens eine Aktivierungsmittelabkühlvorrichtung und/oder einen Aktivierungsmittelabführkanal aufweist,
**dadurch gekennzeichnet, dass**
das schallwirksame Element (11) in der Aktivierungsmittelerwärmungsvorrichtung, in der Aktivierungsmittelabkühlvorrichtung und/oder im Aktivierungsmittelabführkanal angeordnet ist.

4. Vorrichtung nach einem der vorhergehenden Ansprüche,
**dadurch gekennzeichnet, dass**
das schallwirksame Element (11) ein einlagiges oder mehrlagiges Gewebe enthält, wobei das schallwirksame Element eine Wabenstruktur enthält und wobei die Maschenweite des Gewebes (14) den Wert 5000 µm, bevorzugt 1000 µm und besonders bevorzugt 500 µm unterschreitet.

5. Vorrichtung nach einem der vorhergehenden Ansprüche,
**dadurch gekennzeichnet, dass**
das schallwirksame Element (11) eine Mehrzahl von Gitterelementen (13) enthält, die zusammen eine Gitterstruktur (14) mit Öffnungen (15) bilden, wobei ein Gitterelement (13) durch Parallelverschiebung eines ebenen Querschnitts (16) senkrecht zur Querschnittsebene gebildet werden kann, und wobei eine erste Mehrzahl von Gitterelementen (13) gegenüber einer zweiten Mehrzahl von Gitterelementen (13) einen Winkel zwischen 20° und 90°, bevorzugt zwischen 45° und 90° und besonders bevorzugt zwischen 85° und 90° einnimmt, wobei die Gitterelemente (13) Kerben (17) aufweisen, die derart ausgebildet sind, dass jeweils gegeneinander angewinkelte Gitterelemente (13) ineinandergesteckt werden können, wobei
die jeweils gegeneinander angewinkelten Gitterelemente (13) kraft-, form-, und/oder stoffschlüssig miteinander verbunden sind und bevorzugt zusätzlich durch einen Rahmen oder eine Stützstruktur in Position gehalten werden, wobei der ebene Querschnitt (16) einen runden und einen im Wesentlichen gegenüberliegenden spitzen Bereich aufweist, und wobei
mehrere Gitterstrukturen (14) derart gestapelt sind, dass ihre Öffnungen (15) zumindest teilweise zueinander fluchten und/oder zumindest teilweise zueinander versetzt und/oder verdreht sind.

6. Vorrichtung nach einem der vorhergehenden Ansprüche,
**dadurch gekennzeichnet, dass**
das schallwirksame Element (11) eine Vielzahl von räumlichen Teilstrukturen (18), bevorzugt Kugeln, enthält, die vorzugsweise im Wesentlichen kubisch primitiv, kubisch raumzentriert, kubisch flächenzentriert oder als hexagonal dichteste Packung angeordnet sind.

7. Vorrichtung nach einem der vorhergehenden Ansprüche,
**dadurch gekennzeichnet, dass**
das schallwirksame Element eine Vielzahl von Stromlinienkörpern (19) enthält, wobei ein Stromlinienkörper (19) ein im Wesentlichen halbkugelförmiges Ende (19a) und ein gegenüberliegendes spitzes Ende (19b) aufweist, wobei durch das halbkugelförmige Ende (19a) und das spitze Ende (19b) eine Stromlinienkörperachse (20) verläuft und wobei die Stromlinienkörperachsen (20) sämtlicher Stromlinienkörper (19) des schallwirksamen Elements (11) im Wesentlichen parallel orientiert sind, wobei
das schalldämpfende Material (29) an der Innenfläche (30) des äußeren Rohrs (23) angeordnet ist, wobei an einer der Rohrachse (22) zugewandten Seite des schalldämpfenden Materials (29) eine Vielzahl von im wesentlichen Spitz in Richtung der Rohrachse zulaufenden Strukturen ausgebildet ist und wobei das schalldämpfende Material (29) bevorzugt porös ist.

8. Vorrichtung nach einem der vorstehenden Ansprüche,
**dadurch gekennzeichnet, dass**
das schallwirksame Element eine Vielzahl, zumindest jedoch zwei der Strukturen:
Gitterstruktur mit Öffnungen (15);
Wabenstruktur mit Öffnungen (15);
einlagiges oder mehrlagiges Gewebe mit Öffnungen (15);
Sinterstruktur mit Öffnungen (15);
Wirrfaserstruktur mit Öffnungen;
Ansammlung von räumlichen Teilstrukturen (18), bevorzugt Kugeln , die vorzugsweise im Wesentlichen kubisch primitiv, kubisch raumzentriert, kubisch flächenzentriert oder als hexagonal dichteste Packung angeordnet sind, wobei die Bereiche in der Ansammlung von Teilstrukturen, in denen keine Teilstrukturen ausgebildet sind, Öffnungen (15) festlegen;
Ansammlung von Stromlinienkörpern (19), wobei ein Stromlinienkörper (19) ein im Wesentlichen halbkugelförmiges Ende (19a) und ein gegenüberliegendes spitzes Ende (19b) aufweist, wobei durch das halbkugelförmige Ende (19a) und das spitze Ende (19b) eine Stromlinienkörperachse (20) verläuft, wobei die Stromlinienkörperachsen (20) sämtlicher Stromlinienkörper (19) des schallwirksamen Elements (11) im Wesentlichen parallel orientiert sind und wobei die Bereiche in der Ansammlung von Stromlinienkörpern, in denen keine Teilstrukturen ausgebildet sind, Öffnungen (15) festlegen;
enthält,
wobei die Strukturen bevorzugt derart gestapelt sind, dass ihre Öffnungen (15) zumindest teilweise zueinander fluchten und/oder zumindest teilweise zueinander versetzt und/oder verdreht sind.

9. Vorrichtung nach einem der vorstehenden Ansprüche,
**dadurch gekennzeichnet, dass**
das schallwirksame Element (11) oder Teile des schallwirksamen Elements (11) aus einem vorzugsweise metallischen und/oder einem keramischen Werkstoff gebildet sind, der sich für einen dauerhaften Einsatz bei Temperaturen von bis zu 900°C, bevorzugt jedoch bis zu 500°C, eignet, wobei das schallwirksame Element (11) durch ein Gussverfahren, ein Sinterverfahren oder ein additives Fertigungsverfahren gebildet wird.

10. Vorrichtung nach einem der vorhergehenden Ansprüche,
**dadurch gekennzeichnet, dass**
das schallwirksame Element (11) eine innere Leitung (21) mit einer Achse(22) und eine im Wesentlichen konzentrisch zu dieser Achse (22) angeordnete äußere Leitung (23) aufweist, wobei die äußere Leitung (23) einen größeren Querschnitt aufweist, als die innere Leitung (21), wobei sich die innere Leitung (21) und die äußere Leitung (23) in einem ersten Längenbereich (24) überlappen, wobei die innere Leitung (21) an einem ersten Ende (25) geöffnet und an einem im Wesentlichen gegenüberliegenden Ende verschlossen ist und wobei die äußere Leitung (23) an einem zweiten Ende (26) geöffnet und an einem im wesentlichen gegenüberliegenden Ende verschlossen ist, wobei die innere Leitung (21) an ihrer Mantelfläche (27) Durchgangsöffnungen (28) aufweist, die ausgebildet sind, das erste Ende (25) in fluidische Verbindung mit dem zweiten Ende (26) zu bringen und wobei im ersten Längenbereich (24) ein schalldämpfendes Material (29) angeordnet ist.

11. Vorrichtung nach einem der vorstehenden Ansprüche,
**dadurch gekennzeichnet, dass**
das im Einströmkanal (9) des Düsenkörpers (8) und/oder das am Austrittsbereich (10) des Düsenkörpers (8) angeordnete schallwirksame Element (11) form-, kraft- und/oder stoffschlüssig am Düsenkörper (8) befestigt ist.

12. Vorrichtung nach einem der Ansprüche 1 bis 8,
**dadurch gekennzeichnet, dass**
das im Einströmkanal (9) des Düsenkörpers (8) und/oder das am Austrittsbereich (10) des Düsenkörpers (8) angeordnete schallwirksame Element einstückig mit dem Düsenkörper (8) ausgeführt ist, wobei das am Austrittsbereich (10) des Düsenkörpers (8) angeordnete schallwirksame Element (11) flächenbündig im Düsenkörper (8) versenkt ist.

13. Vorrichtung nach einem der vorstehenden Ansprüche,
**dadurch gekennzeichnet, dass**
das in der Zuleitung (7) der Aktivierungseinrichtung (6) angeordnete schallwirksame Element (11) kraft-, form-, oder stoffschlüssig mit der Zuleitung (7) verbunden ist.

14. Verfahren zum Beschichten und/oder Aktivieren von Werkstücken (1), die bevorzugt zumindest abschnittsweise aus Holz, Holzwerkstoffen, Kunststoff, Aluminium oder dergleichen bestehen, mit einer Vorrichtung nach einem der vorhergehenden Ansprüche, mit den Schritten:
- Herbeiführen einer Relativbewegung zwischen der Andrückeinrichtung (4) und dem jeweiligen Werkstück (1) mittels der Fördereinrichtung (5);
- Zuführen des Beschichtungsmaterials (2) mittels der Zuführeinrichtung (3);
- Aufbringen und/oder Aktivieren eines Haftmittels auf einem in der Zuführeinrichtung (3) zugeführten Beschichtungsmaterial (2) und/oder einer zu beschichtenden Oberfläche eines Werkstücks (1) mittels der Aktivierungseinrichtung (6).

15. Verfahren zum Beschichten und/oder Aktivieren von Werkstücken (1), die bevorzugt zumindest abschnittsweise aus Holz, Holzwerkstoffen, Kunststoff, Aluminium oder dergleichen bestehen, mit einer Vorrichtung nach einem der Ansprüche 1 bis 13, wobei die Vorrichtung zumindest einen Sensor zum Messen einer Messgröße aufweist, mit den Schritten:
- Messen einer Messgröße
- Verändern eines Arbeitsparameters einer Bearbeitungsmaschine auf der Grundlage der gemessenen Messgröße; wobei die Messgröße eine Temperatur, ein atmosphärische Druck, ein Schalldruck, eine Schallfrequenz, eine Fluidviskosität oder eine Reynoldszahl ist, und bei dem der Arbeitsparameter eine Vorschubgeschwindigkeit, eine Strömungsgeschwindigkeit, eine Heiz-/Kühlleistung, und/oder eine Aktivierungsenergie ist.

## Claims

1. Apparatus for coating workpieces (1) that preferably consist at least in portions of wood, wood-based materials, plastics material, aluminium or the like, said apparatus comprising a supply device for supplying a coating material (2); a pressing device (4) for pressing the coating material (2) onto a surface of a workpiece; a conveying device for bringing about a relative movement between the pressing device (4) and the relevant workpiece; and an activation device (6) for activating an adhesive on a coating material (2) supplied in the supply device (3) and/or for activating an adhesive on a surface of a workpiece (1) to be coated, wherein the activation device (6) comprises at least one supply line (7) for supplying an activating agent and a nozzle body (8) having an inflow channel (9) and a discharge region (10),
**characterised in that**
the activation device comprises at least one sound-absorbing element (11) which is designed to reduce the sound pressure resulting from the flow of the activating agent and/or to cause a frequency shift, wherein the sound-absorbing element (11) is arranged at least at one of the following locations: supply line (7) of the activation device (6), inflow channel (9) of the nozzle body (8), discharge region (10) of the nozzle body (8).

2. Apparatus according to claim 1, wherein the at least one sound-absorbing element (11) is designed as a sound-absorbing element and/or as a resonator.

3. Apparatus according to any of the preceding claims, wherein the activation device (6) comprises at least one activating agent heating means and/or at least one activating agent cooling means and/or an activating agent discharge channel,
**characterised in that**
the sound-absorbing element (11) is arranged in the activating agent heating means, in the activating agent cooling means and/or in the activating agent discharge channel.

4. Apparatus according to any of the preceding claims,
**characterised in that**
the sound-absorbing element (11) contains a single-layer or multilayer woven fabric, wherein the sound-absorbing element contains a honeycomb structure and wherein the mesh size of the woven fabric (14) is less than the value 5000 um, preferably 1000 um and particularly preferably 500 µm.

5. Apparatus according to any of the preceding claims,
**characterised in that**
the sound-absorbing element (11) contains a plurality of grid elements (13) that together form a grid structure (14) having openings (15), wherein a grid element (13) can be formed by parallel displacement of a planar cross section (16) perpendicular to the cross section plane, and wherein a first plurality of grid elements (13) enclose an angle of between 20° and 90°, preferably between 45° and 90° and particularly preferably between 85° and 90° with respect to a second plurality of grid elements (13), wherein the grid elements (13) comprise notches (17) which are designed such that grid elements (13) angled towards one another can be inserted into one another in each case, wherein the grid elements (13) angled towards one another in each case are interconnected in a frictional, interlocking and/or bonded manner and are preferably also held in position by means of a frame or a support structure, wherein the planar cross section (16) comprises a round and a substantially opposing pointed region, and wherein multiple grid structures (14) are stacked such that their openings (15) are at least partially aligned with one another and/or at least partially offset and/or rotated relative to one another.

6. Apparatus according to any of the preceding claims,
**characterised in that**
the sound-absorbing element (11) contains a large number of spatial substructures (18), preferably spheres, which are preferably arranged in a substantially simple cubic, body-centred cubic or face-centred cubic manner or as hexagonal close packing.

7. Apparatus according to any of the preceding claims,
**characterised in that**
the sound-absorbing element contains a large number of streamlined bodies (19), wherein a streamlined body (19) comprises a substantially hemispherical end (19a) and an opposing pointed end (19b), wherein a streamlined body axis (20) extends through the hemispherical end (19a) and the pointed end (19b) and wherein the streamlined body axes (20) of all streamlined bodies (19) of the sound-absorbing element (11) are oriented substantially in parallel, wherein the sound-muffling material (29) is arranged on the inner surface (30) of the outer tube (23), wherein a large number of structures that converge substantially in a point in the direction of the tube axis is formed on a side of the sound-muffling material (29) that faces the tube axis (22) and wherein the sound-muffling material (29) is preferably porous.

8. Apparatus according to any of the preceding claims,
**characterised in that**
the sound-absorbing element contains a large number, but at least two of the following structures:
grid structure having openings (15);
honeycomb structure having openings (15);
single-layer of multilayer woven fabric having openings (15);
sintered structure having openings (15);
structure of randomly oriented fibres and having openings;
collection of spatial substructures (18), preferably spheres, which are preferably arranged in a substantially simple cubic, body-centred cubic or face-centred cubic manner or as hexagonal close packing, wherein the regions in the collection of substructures in which no substructures are formed define openings (15);
collection of streamlined bodies (19), wherein a streamlined body (19) comprises a substantially hemispherical end (19a) and an opposing pointed end (19b), wherein a streamlined body axis (20) extends through the hemispherical end (19a) and the pointed end (19b), wherein the streamlined body axes (20) of all streamlined bodies (19) of the sound-absorbing element (11) are oriented substantially in parallel and wherein the regions in the collection of streamlined bodies in which no substructures are formed define openings (15),
wherein the structures are preferably stacked such that their openings (15) are at least partially aligned with one another and/or at least partially offset and/or rotated relative to one another.

9. Apparatus according to any of the preceding claims,
**characterised in that**
the sound-absorbing element (11) or parts of the sound-absorbing element (11) are made of a preferably metal and/or ceramic material that is suitable for continuous use at temperatures of up to 900°C, preferably however up to 500°C, wherein the sound-absorbing element (11) is made using a casting method, a sintering method or an additive manufacturing method.

10. Device according to any of the preceding claims,
**characterised in that**
the sound-absorbing element (11) comprises an inner line (21) having an axis (22) and an outer line (23) that is arranged substantially concentrically with respect to this axis (22), wherein the outer line (23) has a larger cross section than the inner line (21), wherein the inner line (21) and the outer line (23) overlap in a first longitudinal region (24), wherein the inner (21) is open at a first end (25) and closed at a substantially opposing end and wherein the outer line (23) is open at a second end (26) and closed at a substantially opposing end, wherein the inner line (21) comprises through-openings (28) on its lateral surface (27), which through-openings are designed to fluidically connect the first end (25) to the second end (26), and wherein a sound-muffling material (29) is arranged in the first longitudinal region (24).

11. Apparatus according to any of the preceding claims,
**characterised in that**
the sound-absorbing element (11) arranged in the inflow channel (9) of the nozzle body (8) and/or at the discharge region (10) of the nozzle body (8) is secured to the nozzle body (8) in a frictional, interlocking and/or bonded manner.

12. Apparatus according to any of claims 1 to 8,
**characterised in that**
the sound-absorbing element arranged in the inflow channel (9) of the nozzle body (8) and/or at the discharge region (10) of the nozzle body (8) is integrally formed with the nozzle body (8), wherein the sound-absorbing element (11) arranged at the discharge region (10) of the nozzle body (8) is sunken in the nozzle body (8) such that the surfaces are flush.

13. Apparatus according to any of the preceding claims,
**characterised in that**
the sound-absorbing element (11) arranged in the supply line (7) of the activation device (6) is connected to the supply line (7) in a frictional, interlocking or bonded manner.

14. Method for coating and/or activating workpieces (1) that preferably consist at least in portions of wood, wood-based materials, plastics material, aluminium or the like, using an apparatus according to any of the preceding claims, said method comprising the steps of:
- bringing about a relative movement between the pressing device (4) and the relevant workpiece (1) by means of the conveying device (5);
- supplying the coating material (2) by means of the supply device (3);
- applying and/or activating an adhesive on a coating material (2) supplied in the supply device (3) and/or on a surface of a workpiece (1) to be coated by means of the activation device (6).

15. Method for coating and/or activating workpieces (1) that preferably consist at least in portions of wood, wood-based materials, plastics material, aluminium or the like, using an apparatus according to any of claims 1 to 13, wherein the apparatus comprises at least one sensor for measuring a measurand, said method comprising the steps of:
- measuring a measurand,
- changing an operating parameter of a machine tool based on the measured measurand; wherein the measurand is a temperature, an atmospheric pressure, a sound pressure, a sound frequency, a fluid viscosity or a Reynolds number, and wherein the operating parameter is a feed rate, a flow rate, a heating/cooling power and/or an activation energy.

## Revendications

1. Dispositif pour le revêtement de pièces à usiner (1), qui se composent de préférence au moins par sections de bois, de matériaux à base de bois, de plastique, d'aluminium ou de matériaux similaires, comprenant
un appareil d'alimentation pour alimenter un matériau de revêtement (2) ; un appareil de pression (4) pour presser le matériau de revêtement (2) contre une surface d'une pièce à usiner ; un appareil de transport pour provoquer un mouvement relatif entre l'appareil de pression (4) et la pièce à usiner respective ; et un appareil d'activation (6) pour activer un agent adhésif sur un matériau de revêtement (2) amené dans l'appareil d'alimentation (3) et/ou pour activer un agent adhésif sur une surface à revêtir d'une pièce (1), dans lequel l'appareil d'activation (6) présente au moins une conduite d'alimentation (7) pour amener un agent d'activation ainsi qu'un corps de buse (8) avec un canal d'entrée (9) et une zone de sortie (10),
**caractérisé en ce que**
l'appareil d'activation présente au moins un élément à effet acoustique (11) qui est réalisé de manière à réduire la pression acoustique résultant de l'écoulement de l'agent d'activation et/ou à provoquer un décalage de fréquence, dans lequel l'élément à effet acoustique (11) se trouve à au moins l'un des endroits suivants : conduite d'alimentation (7) du dispositif d'activation (6) ; canal d'entrée (9) du corps de buse (8) ; zone de sortie (10) du corps de buse (8).

2. Dispositif selon la revendication 1, dans lequel l'au moins un élément (11) à effet acoustique est réalisé comme un élément d'amortissement du son et/ou comme un résonateur.

3. Dispositif selon l'une quelconque des revendications précédentes, dans lequel l'appareil d'activation (6) présente au moins un dispositif de chauffage d'agent d'activation et/ou au moins un dispositif de refroidissement d'agent d'activation et/ou un canal d'évacuation d'agent d'activation,
**caractérisé en ce que**
l'élément (11) à effet acoustique est agencé dans le dispositif de chauffage d'agent d'activation, dans le dispositif de refroidissement d'agent d'activation et/ou dans le canal d'évacuation d'agent d'activation.

4. Dispositif selon l'une quelconque des revendications précédentes,
**caractérisé en ce que**
l'élément (11) à effet acoustique contient un tissu monocouche ou multicouche, dans lequel l'élément à effet acoustique contient une structure en nid d'abeilles et dans lequel la largeur de maille du tissu (14) est inférieure à la valeur 5 000 µm, de préférence 1 000 µm et le plus préférentiellement 500 µm.

5. Dispositif selon l'une quelconque des revendications précédentes,
**caractérisé en ce que**
l'élément (11) à effet acoustique contient une pluralité d'éléments de grille (13) qui forment ensemble une structure de grille (14) avec des ouvertures (15), dans lequel un élément de grille (13) peut être formé par déplacement parallèle d'une section transversale plane (16) perpendiculairement au plan de la section transversale, et dans lequel une première pluralité d'éléments de grille (13) forme, par rapport à une seconde pluralité d'éléments de grille (13), un angle entre 20° et 90°, de préférence entre 45° et 90° et le plus préférentiellement entre 85° et 90°, dans lequel les éléments de grille (13) présentent des encoches (17) qui sont réalisées de sorte que des éléments de grille (13) respectivement inclinés les uns par rapport aux autres peuvent être emboîtés les uns dans les autres, dans lequel
les éléments de grille (13) respectivement coudés l'un par rapport à l'autre sont reliés entre eux par complémentarité de force, de forme et/ou de matière et sont de préférence en outre maintenus en position par un cadre ou une structure de support, dans lequel la section transversale plane (16) présente une zone arrondie et une zone pointue sensiblement opposée, et dans lequel
plusieurs structures de grille (14) sont empilées de sorte que leurs ouvertures (15) sont au moins partiellement alignées les unes par rapport aux autres et/ou sont au moins partiellement décalées et/ou tordues les unes par rapport aux autres.

6. Dispositif selon l'une quelconque des revendications précédentes,
**caractérisé en ce que**
l'élément (11) à effet acoustique contient une pluralité de structures partielles (18) spatiales, de préférence des sphères, qui sont agencées de préférence sensiblement de manière cubique primitive, cubique centrée sur l'espace, cubique centrée sur la surface ou en tant que paquet hexagonal le plus dense.

7. Dispositif selon l'une quelconque des revendications précédentes,
**caractérisé en ce que**
l'élément à effet acoustique contient une pluralité de corps aérodynamiques (19), dans lequel un corps aérodynamiques (19) présente une extrémité sensiblement hémisphérique (19a) et une extrémité pointue opposée (19b), dans lequel un axe de corps aérodynamiques (20) s'étend à travers l'extrémité hémisphérique (19a) et l'extrémité pointue (19b) et dans lequel les axes de corps aérodynamiques (20) de tous les corps aérodynamiques (19) de l'élément à effet acoustique (11) sont orientés sensiblement parallèlement, dans lequel
le matériau insonorisant (29) est agencé sur la surface intérieure (30) du tube extérieur (23), dans lequel une pluralité de structures se terminant sensiblement en pointe dans la direction de l'axe du tube est réalisée sur un côté du matériau insonorisant (29) orienté vers l'axe du tube (22), et dans lequel le matériau insonorisant (29) est de préférence poreux.

8. Dispositif selon l'une quelconque des revendications précédentes,
**caractérisé en ce que**
l'élément sonore contient une pluralité de structures, au moins deux parmi celles-ci :
structure de grille avec ouvertures (15) ;
structure en nid d'abeilles avec ouvertures (15) ;
tissu monocouche ou multicouche avec ouvertures (15) ;
structure frittée avec ouvertures (15) ;
structure en fibres emmêlées avec ouvertures ;
accumulation de structures partielles (18) spatiales, de préférence des sphères, qui sont agencées de préférence sensiblement de manière cubique primitive, cubique centrée sur l'espace, cubique centrée sur la surface ou en tant que paquet hexagonal le plus dense, dans lequel les zones dans l'accumulation de structures partielles, dans lesquelles aucune structure partielle n'est formée, définissent des ouvertures (15) ;
accumulation de corps aérodynamiques (19), dans lequel un corps aérodynamique (19) présente une extrémité sensiblement hémisphérique (19a) et une extrémité pointue (19b) opposée, dans lequel un axe de corps aérodynamique (20) passe par l'extrémité hémisphérique (19a) et l'extrémité pointue (19b), dans lequel les axes de corps aérodynamiques (20) de tous les corps aérodynamiques (19) de l'élément acoustique (11) sont orientés sensiblement parallèlement et dans lequel les zones dans l'accumulation de corps aérodynamiques, dans lesquelles aucune structure partielle n'est réalisée, définissent des ouvertures (15) ;
dans lequel les structures sont de préférence empilées de sorte que leurs ouvertures (15) sont au moins partiellement alignées les unes par rapport aux autres et/ou sont au moins partiellement décalées et/ou tordues les unes par rapport aux autres.

9. Dispositif selon l'une quelconque des revendications précédentes,
**caractérisé en ce que**
l'élément (11) à effet acoustique ou des parties de l'élément (11) à effet acoustique sont formés d'un matériau de préférence métallique et/ou d'un matériau céramique, qui convient à une utilisation durable à des températures allant jusqu'à 900 °C, cependant de préférence jusqu'à 500 °C, dans lequel l'élément (11) à effet acoustique est formé par un procédé de coulée, un procédé de frittage ou un procédé de fabrication additive.

10. Dispositif selon l'une quelconque des revendications précédentes,
**caractérisé en ce que**
l'élément (11) à effet acoustique présente un conduit intérieur (21) avec un axe (22) et un conduit extérieur (23) agencé sensiblement concentriquement à cet axe (22), dans lequel le conduit extérieur (23) présente une section transversale plus grande que le conduit intérieur (21), dans lequel le conduit intérieur (21) et le conduit extérieur (23) se chevauchent dans une première zone de longueur (24), dans lequel la conduite intérieure (21) est ouverte à une première extrémité (25) et fermée à une extrémité sensiblement opposée et dans lequel la conduite extérieure (23) est ouverte à une seconde extrémité (26) et fermée à une extrémité sensiblement opposée, dans lequel la conduite intérieure (21) présente sur sa surface d'enveloppe (27) des ouvertures de passage (28) qui sont réalisées pour mettre la première extrémité (25) en communication fluidique avec la seconde extrémité (26) et dans lequel un matériau amortisseur de bruit (29) est agencé dans la première zone longitudinale (24).

11. Dispositif selon l'une quelconque des revendications précédentes,
**caractérisé en ce que**
l'élément (11) à effet acoustique agencé dans le canal (9) d'entrée du corps (8) de buse et/ou dans la zone (10) de sortie du corps (8) de buse est fixé au corps de buse (8) par complémentarité de forme, de force et/ou de matière.

12. Dispositif selon l'une quelconque des revendications 1 à 8,
**caractérisé en ce que**
l'élément à effet acoustique agencé dans le canal d'entrée (9) du corps de buse (8) et/ou l'élément à effet acoustique agencé dans la zone de sortie (10) du corps de buse (8) est conçu d'une seule pièce avec le corps de buse (8), dans lequel l'élément à effet acoustique (11) agencé dans la zone de sortie (10) du corps de buse (8) est encastré de manière affleurante dans le corps de buse (8).

13. Dispositif selon l'une quelconque des revendications précédentes,
**caractérisé en ce que**
l'élément (11) à effet acoustique agencé dans la conduite d'alimentation (7) de l'appareil d'activation (6) est relié à la conduite d'alimentation (7) par complémentarité de force, de forme ou de matière.

14. Procédé de revêtement et/ou d'activation de pièces à usiner (1), qui consistent de préférence au moins par sections en du bois, des matériaux à base de bois, du plastique, de l'aluminium ou similaire, avec un dispositif selon l'une quelconque des revendications précédentes, comprenant les étapes suivantes :
- provoquer un mouvement relatif entre l'appareil de pression (4) et la pièce à usiner respective (1) au moyen du dispositif de transport (5) ;
- amener le matériau de revêtement (2) au moyen de l'appareil d'alimentation (3) ;
- appliquer et/ou activer un agent adhésif sur un matériau de revêtement (2) amené dans le dispositif d'alimentation (3) et/ou sur une surface à revêtir d'une pièce à usiner (1) au moyen du dispositif d'activation (6).

15. Procédé pour revêtir et/ou activer des pièces (1), qui consistent de préférence au moins par sections en du bois, des matériaux à base de bois, du plastique, de l'aluminium ou similaire, avec un dispositif selon l'une quelconque des revendications 1 à 13, dans lequel le dispositif présente au moins un capteur pour mesurer une grandeur de mesure, avec les étapes suivantes :
- mesurer une grandeur de mesure
- modifier un paramètre de travail d'une machine d'usinage sur la base de la quantité mesurée ; dans lequel la quantité mesurée est une température, une pression atmosphérique, une pression acoustique, une fréquence acoustique, une viscosité de fluide ou un nombre de Reynolds, et dans lequel le paramètre de travail est une vitesse d'avance, une vitesse d'écoulement, une puissance de chauffage/refroidissement, et/ou une énergie d'activation.
